# EUROPEAN PATENT APPLICATION

(11) **EP 4 029 746 A1**
(43) Date of publication of application: **20.07.2022**
(21) Application number: 21152244.6
(22) Date of filing: 19.01.2021
(51) Int. Cl.: B60T 11/32, B60T 11/34, B60T 13/66, B60T 13/68, B60T 17/00, B60T 17/04, B60T 17/22

(54) **ELECTRONICALLY CONTROLLED PROTECTION VALVE**

(71) Applicant: KNORR-BREMSE Systeme für Nutzfahrzeuge GmbH, 80809 München (DE)
(72) Inventor: Polyak, Tibor, 6044 Hetényegyháza (HU)
(74) Representative: DTS Patent- und Rechtsanwälte Schnekenbühl und Partner mbB

(57) **Abstract**

The present invention relates to control valve device (10), especially protection valve device, for an air treatment device of a vehicle, especially utility vehicle, with at least one working inlet (12); with at least one working outlet (14); and with at least one solenoid control valve unit (16), wherein the solenoid control valve unit (16) is connectable to an electronic control unit; wherein the solenoid control valve unit (16) is further connected to the working inlet (12) and the working outlet (14), wherein the solenoid control valve unit (16) comprises at least one open state for connecting the working inlet (12) to working outlet (14) and further comprises at least one closed state for separating the working inlet (12) from the working outlet (14), wherein electronic control unit is configured to control the solenoid control valve unit (16) such that, based on at least one inlet pressure at the working inlet (12) and/or at least one outlet pressure at the working outlet (14), the at least one outlet pressure at the working outlet (14) is controlled directly via the solenoid control valve unit (16).

Further, the present invention relates to a multi-circuit protection valve device for an air treatment device of a vehicle, especially utility vehicle, with at least one control valve device (10) as mentioned above.

## Description

The present invention relates to a control valve device, especially protection valve device, for an air treatment device of a vehicle, especially utility vehicle, with at least one working inlet; with at least one working outlet; and with at least one solenoid control valve unit, wherein the solenoid control valve unit is connectable to an electronic control unit; wherein the solenoid control valve unit is further connected to the working inlet and the working outlet, wherein the solenoid control valve unit comprises at least one open state for connecting the working inlet to working outlet and further comprises at least one closed state for separating the working inlet from the working outlet.

Further, the present invention relates to multi-circuit protection valve device for an air treatment device of a vehicle, especially utility vehicle, with at least one control valve device as mentioned above.

In the field of vehicles and especially utility or commercial vehicles usually pneumatic systems are used for brakes, suspension and other auxiliary systems, and the distribution of the air is handled by a multi-circuit protection valve that can divide the air provided by a compressor or the like, handle the different opening and closing pressures and the pressure limitation of each circuits and the circuit protection.

Such conventional protection valves are already known in the prior art.

DE 102013000275 A1 shows a method involving an arrangement of a supply line with a trailer brake valve and a reservoir between a trailer-side coupling head and service brake cylinders of wheel brakes in a trailer. A portion of a supply line of a trailer brake circuit is filled to a predetermined upper pressure limit with compressed air, where the pressure required for the air is energetically generated through a compressed air supply device. A relevant portion of the supply line is shut-off by closing a locking element. An independent claim is included for a device for controlling a compressed air-brake system of a vehicle combination consisting of a tractor and a trailer.

DE 102013110736 A1 discloses a compressed air preparation device in which pressure sensors are used. According to the invention, an unadapted pressure signal of the pressure sensors, which is faulty, is fed to a control unit. Individual adaptation dependencies are stored on a permanent memory, on the basis of which the control unit can convert the non-adapted pressure signals into adapted pressure signals which are calibrated and error-cleaned.

DE 102019100788 A1 discloses a method for leakage monitoring of a compressed air system of a motor vehicle, which has a compressed air supply system, a compressor connected to the latter on the input side and several compressed air consumer circuits connected to the latter on the output side.

DE 102008063819 A1 relates to a combined pressure-limiting and overflow valve, particularly for an air preparation unit in a commercial vehicle, wherein the combined pressure-limiting and overflow valve comprises a housing, a cover, an inlet opening, a first outlet opening, a piston, an overflow valve seat, and a pressure-limiting valve seat, wherein both an opening and a closing pressure of the overflow valve seat and an opening and a closing pressure of the pressure-limiting valve seat can be adjusted by means of the adjusting spring.

But, due to the future trend of partial or complete electrification of powertrains of vehicles, especially utility vehicles, the demand of more dynamic functions of the control valves of such air treatment devices or multi-circuit protection valves increases, while the demand of pressurized air in general decreases (e.g. due to the recuperation possibility of kinetic energy). These goals may not be addressed enough with conventional solutions of the prior art as the protection valves disclosed therein provide constant opening, closing and cut-off pressures during operation and are not able to adjust them to the actually demands.

It is therefore an object of the present invention to improve a control valve device and a corresponding multi circuit-protection valve device as mentioned above, in particular in that the control valve provides more variable operation states, is easier to manufacture and/or assemble, and is simplified in structural terms.

This object is solved according to the present invention with a control valve device according to the features of claim 1. Correspondingly, a control valve device, especially protection valve device, for an air treatment device of a vehicle, especially utility vehicle, is provided with at least one working inlet; with at least one working outlet; and with at least one solenoid control valve unit, wherein the solenoid control valve unit is connectable to an electronic control unit; wherein the solenoid control valve unit is further connected to the working inlet and the working outlet, wherein the solenoid control valve unit comprises at least one open state for connecting the working inlet to working outlet and further comprises at least one closed state for separating the working inlet from the working outlet, wherein electronic control unit is configured to control the solenoid control valve unit such that, based on at least one inlet pressure at the working inlet and/or based on at least one outlet pressure at the working outlet, the at least one outlet pressure at the working outlet is controlled directly via the solenoid control valve unit.

The invention is based on the basic idea that, by providing just one directly and electrically controlled protection valve device including such a solenoid control valve unit with at least one open and closed state for connecting and disconnecting the working inlet to working outlet, the protection valve may be simplified strongly. That is, the function of the overflow valves providing a defined opening and closing pressure together with the circuit protection, and the pressure limiting function of a pressure limiting valve providing a defined pressure limitation of the protection valves may be established by at least one solenoid control valve unit controlled accordingly by the control unit. Therefore, this circuit protection and pressure limiting solution according to the present invention is optimized for low air-demand and/or electric vehicle solutions and is simplified in terms of structural advantages, less building space, and weight. Especially, it is conceivable that the at least one outlet pressure at the working outlet is controlled directly via at least one predetermined time period of the open state of the solenoid control valve unit and/or via at least one predetermined time period of the closed state of the solenoid control valve unit. In this regard, the predetermined time period of the open state and the closed state is based or dependent on the at least one inlet pressure and/or the at least one outlet pressure, respectively.

In particular, the control valve device comprises at least one first pressure sensor that is arranged such that the at least one inlet pressure of the working inlet is sensed by the first pressure sensor. The first pressure sensor has the important task to sense or acquire the current pressure values at the working inlet of the control valve or protection valve and provide them to the electronic control unit for further processing. Without these pressure values, a definite control strategy of the solenoid control valve unit on the one hand, and of the whole control valve device on the other hand, would be impossible. Therefore, the pressure values in the inlet line have to be sensed continuously in order to control the pressure at the working outlet that is performed by the solenoid control valve unit accordingly.

Additionally, the first pressure sensor is integrated into the control valve device or wherein the first pressure sensor is externally arranged with regard to the control valve device. By integrating the first pressure sensor into the control valve device, less components are necessary and advantages in terms of manufacturing efforts and costs, building space as well as assembling efforts and costs, and a weight reduction are provided. Further, the sensing accuracy of the first sensor may be increased as it is arranged in direct vicinity of the control valve. Alternatively, the first pressure sensor may be arranged externally with regard to the control valve device or may be attached to the to the control valve device such that the first pressure sensor may be established as a standalone solution, which simplifies a mounting or maintenance procedure for example.

Also, the solenoid control valve unit comprises at least one valve inlet that is connected to the working inlet via at least one inlet line, wherein the first pressure sensor is arranged in the inlet line. This arrangement enables a safe and structurally simple sensor position having the advantage that the pressure at the working inlet and the valve inlet together can be sensed very simply without arranging a further pressure sensor at one of the working inlet and valve inlet.

Moreover, the control valve device comprises at least one second pressure sensor that is arranged such that the at least one outlet pressure of the working outlet is sensed by the second pressure sensor. Besides the sensing of the inlet pressure, the second pressure sensor also has an important task. It senses or acquires the current pressure values at the working outlet of the control valve or protection valve and provide them to the electronic control unit for further processing. Without these additional outlet pressure values, a definite control strategy of the solenoid control valve unit would be impossible. Therefore, the pressure values at the working outlet have to be sensed continuously in order to control definite pressure values there, which is performed by the solenoid control valve unit accordingly by its defined opening and closing states according to an overflow valve function and a pressure limitation function.

Further, the second pressure sensor is integrated into the control valve device or wherein the second pressure sensor is arranged externally with regard to the control valve device. The same arguments with regard to the integration of the first pressure sensor also apply to the second pressure sensor. That is, also less components are necessary and advantages in terms of manufacturing efforts and costs, building space as well as assembling efforts and costs, and a weight reduction are provided. Further, the sensing accuracy of the second pressure sensor may be increased as it is arranged in direct vicinity of the control valve. Alternatively, the second pressure sensor may be arranged externally with regard to the control valve device or may be attached to the to the control valve device such that the first pressure sensor may be established as a standalone solution, which simplifies a mounting or maintenance procedure for example.

On the other hand, the solenoid control valve unit comprises at least one valve outlet that is connected to the working outlet via at least one outlet line, wherein the second pressure sensor is arranged in the outlet line. This arrangement also enables a safe and structurally simple sensor position having the advantage that the pressure at the working outlet and the valve outlet together can be sensed very simply without arranging a further pressure sensor at one of the working outlet and the valve outlet.

In addition, the solenoid control valve unit comprises at least one first 2/2-way solenoid control valve. A 2/2- way solenoid control valve combines a compact valve design having little components with a space-saving, function-extending, light-weighting, and simple valve unit having the minimum of two switching states in the form of one open and one closed state.

Especially, the control valve device comprises at least one first safety outlet line that is branched off the outlet line between the valve outlet and the working outlet. The first safety outlet line being connected to the atmosphere has the goal that, in an undesired operation state of the control valve device or the multi-circuit protection valve (e.g. one pneumatic circuit being connected to the working outlet is blocked or clogged), the pressurized air may be vented or de-aerated securely and definitely to the atmosphere. Thus, this set-up increases the overall security of the control valve device as well as the multi-circuit protection device.

Furthermore, at least one second 2/2-way solenoid control valve is arranged in the first safety outlet line. The second 2/2-way solenoid control valve provides a defined and precise opening and closing pressure based on the pressure values sensed by the second pressure sensor. So, a more variable opening and closing characteristic of the first safety outlet line may be provided in order to increase the operation safety of the control valve device.

Moreover, the control valve device comprises at least one second safety outlet line that is branched off the outlet line between the first safety outlet line and the working outlet, and wherein at least one safety check valve is arranged in the second safety outlet line. By a second safety outlet line the overall safety of the control valve device is increased to a higher security level since, in the event that the second 2/2-way solenoid control valve and/or the first safety outlet line is defected, there is a further fall-back level that enables a safe venting or de-aeration via the redundant second safety outlet line.

Besides, the second pressure sensor is arranged in the outlet line between the second safety outlet line and the working outlet. This arrangement enables the most precise sensing of the outlet pressure of the working outlet and is advantageous in terms of a precise control strategy of the first 2/2 solenoid control valve and a safety control strategy by controlling the second 2/2-way solenoid control valve.

In particular, the solenoid control valve unit and the control valve device form a common construction unit. By integrating the solenoid control valve unit and the control valve device into one construction unit, less components are necessary and advantages in terms of manufacturing efforts and costs as well as assembling efforts and costs, building space and a weight reduction are provided.

According to the invention, a multi-circuit protection valve device for an air treatment device of a vehicle, especially utility vehicle, is further provided with at least one control valve device as mentioned above. The advantages and technical teachings as discussed with regard to the control valve device as mentioned above, which is a sub-unit of the multi-circuit protection valve device, are also transferable to the multi-circuit protection valve device accordingly.

Further details and advantages of the present invention shall now be disclosed in the embodiment according to the invention in connection with the drawings.

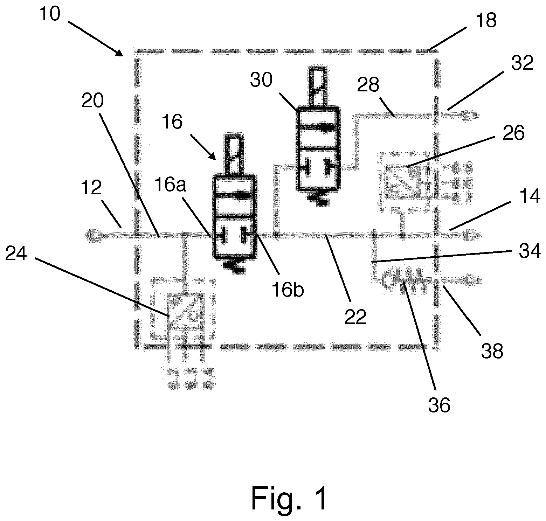

It is shown in
- Fig. 1: a schematic circuit arrangement of a first embodiment of a control valve device according to the invention for an air treatment device of a vehicle.

**Fig. 1** shows a schematic circuit arrangement of a first embodiment of a control valve device 10 according to the invention for an air treatment device of a vehicle.

The control valve device 10 is formed as protection valve device 10 or circuit-protection valve device 10 for an air treatment device of a vehicle (each not shown in Fig. 1).

The vehicle is formed as a utility or commercial vehicle.

According to Fig. 1, the control valve device 10 comprises a working inlet 12, a working outlet 14, and a solenoid control valve unit 16 that is connected to an electronic control unit (not shown in Fig. 1).

The solenoid control valve unit 16 and the control valve device 10 are integrated into a common construction unit 18 as indicated by the dashed boarder line.

The solenoid control valve unit 16 is further connected with the working inlet 12 and with the working outlet 14.

The solenoid control valve unit 16 comprises or is a first 2/2-way solenoid control valve.

The first 2/2-way solenoid control valve may be formed as a currentless open 2/2-way solenoid control valve.

Alternatively, the first 2/2-way solenoid control valve may be formed as a currentless closed 2/2-way solenoid control valve.

This solenoid control valve unit 16 comprises one open state for connecting the working inlet 12 to working outlet 14 and further comprises one closed state for separating the working inlet 12 from the working outlet 14.

The solenoid control valve unit 16 comprises a valve inlet 16a that is connected to the working inlet 12 via an inlet line 20.

Accordingly, solenoid control valve unit 16 also comprises a valve outlet 16b that is connected to the working outlet 14 via an outlet line 22.

The control valve device 10 also comprises a first pressure sensor 24 that is arranged such that a pressure of the working inlet 12 is sensed by it.

To this end, the first pressure sensor 24 is preferably arranged in the inlet line 20.

The first pressure sensor 24 may be integrated into the common construction unit 18 or it may be arranged externally and may be connected to the inlet line 20 via an appropriate sensor line.

According to Fig. 1, the control valve device 10 further comprises a second pressure sensor 26 that is arranged in the outlet line 22.

The second pressure sensor 26 may be integrated into the common construction unit 18 or it may be arranged externally and may be connected to the outlet line 22 via an appropriate sensor line.

The first and second pressure sensors 24, 26 are also connected to the electronic control unit (not shown).

Between the valve outlet 16b of the solenoid control valve unit 16 and the working outlet 14, a first safety outlet line 28 is branched-off the outlet line 22, wherein a second 2/2-way solenoid control valve 30 is arranged in this safety outlet line 28.

This first safety outlet line 28 extends between the outlet line 22 and a first safety outlet 32 of the control valve device 10, which is connected to the atmosphere.

This second 2/2-way solenoid control valve 30 comprises an open state for connecting the outlet line 22 to the atmosphere via the first safety outlet 32 and accordingly comprises a closed state for separating the outlet line 22 from the first safety outlet 32.

The second 2/2-way solenoid control valve 30 may be formed as a currentless open 2/2-way solenoid control valve.

Alternatively, the second 2/2-way solenoid control valve 30 may be formed as a currentless closed 2/2-way solenoid control valve.

Between the first safety outlet line 28 and the working outlet 14, a second safety outlet line 34 is branched-off the outlet line 22, wherein a safety check valve 36 is arranged in this second safety outlet line 34.

This second safety outlet line 34 extends between the outlet line 22 and a second safety outlet 38 of the control valve device 10, which is also connected to the atmosphere.

Accordingly, the second pressure sensor 26 is arranged in the outlet line 22 between the second safety outlet line 34 and the working outlet 14.

The function of the control valve 10 according to Fig. 1 is as follows:
First, compressed air is fed to the working inlet 12 of the control valve device 10 flowing to the valve inlet 16a of the solenoid control valve unit 16 (see Fig. 1) via the inlet line 20.

The direct electronic control of the solenoid control valve unit 16 (via the electronic control unit) serves for the adjustment both of its opening and closing pressure according to an overflow valve function and an opening and closing pressure according to a pressure limiting valve function.

Accordingly, the electronic control unit is configured to control the solenoid control valve unit 16 such that, based on the inlet pressure at the working inlet (via the first pressure sensor 24) and the outlet pressure at the working outlet 14 (via the second pressure sensor 26), the outlet pressure at the working outlet is controlled directly via the solenoid control valve unit 16.

This control function is established via a predetermined time period (that is based or dependent on the inlet pressure and/or the outlet pressure) of the open state of the solenoid control valve unit 16 and via a predetermined time period (that is based or dependent on the inlet pressure and/or the outlet pressure) of the closed state of the solenoid control valve unit 16.

So, the electronically controlled solenoid control valve unit 16 provides opening and closing pressures and limited pressures according to the actual vehicle demand and in connection with the different circuits (for service brakes, parking brake, suspension, and further auxiliary devices) to which the control valve device 10 is connectable (by using a plurality of such control valve devices 10).

During the filling of the different circuits of the pressurized air system of the utility vehicle, the pressure at the working inlet 12 and the valve inlet 16a is increased until an predetermined opening pressure demand of the electronic control unit is reached (via the sensed pressure values of the first pressure sensor 24, specific to different circuits of the vehicle), wherein the solenoid control valve unit 16 is held in its closed state.

Based on the signal of the first pressure sensor 24, the solenoid control valve unit 16 is switched in its open state such that the pressure level at the working outlet 14 is increased (sensed by the second pressure sensor 26).

The function, as described above, relates to an overflow function such that specified, but variable, opening pressures may me adjusted or controlled, and held.

During pressure limitation function, the pressure at the working outlet 14 is increased until a predetermined pressure limitation demand or pressure maximum condition of the vehicle pneumatic system or the control unit is reached (sensed by the second pressure sensor 26, specific to the different circuits of the vehicle).

The solenoid control valve unit 16 is the switched in its closing state accordingly such that the formerly described pressure increasing is cut-off at the working outlet 14 resulting in a limitation of the pressure increasing at the working outlet 14.

That is, the pressure limitation function may be controlled variably by directly controlling the solenoid control valve unit 16 according to a current pressure demand and/or predetermined pressure values or limits at the working outlet 14 (sensed by the second pressure sensor) of the control valve device 10.

If an undesired operation state of the control valve device 10 or the multi-circuit protection valve occurs (e.g. one pneumatic circuit being connected to the working outlet 14 is blocked or clogged), the electronic control unit switches the second 2/2-way solenoid control valve 30 in its open state such that the pressurized air may be vented or de-aerated securely and definitely to the atmosphere from the outlet line 22.

### REFERENCE SIGNS

- 10: control valve device
- 12: working inlet
- 14: working outlet
- 16: solenoid control valve unit
- 16a: valve inlet
- 16b: valve outlet
- 18: common construction unit
- 20: inlet line
- 22: outlet line
- 24: first pressure sensor
- 26: second pressure sensor
- 28: first safety outlet line
- 30: second 2/2-way solenoid control valve
- 32: first safety outlet
- 34: second safety outlet line
- 36: safety check valve
- 38: second safety outlet

## Claims

1. Control valve device (10), especially protection valve device, for an air treatment device of a vehicle, especially utility vehicle, with at least one working inlet (12); with at least one working outlet (14); and with at least one solenoid control valve unit (16), wherein the solenoid control valve unit (16) is connectable to an electronic control unit; wherein the solenoid control valve unit (16) is further connected to the working inlet (12) and the working outlet (14), wherein the solenoid control valve unit (16) comprises at least one open state for connecting the working inlet (12) to working outlet (14) and further comprises at least one closed state for separating the working inlet (12) from the working outlet (14), wherein electronic control unit is configured to control the solenoid control valve unit (16) such that, based on at least one inlet pressure at the working inlet (12) and/or based on at least one outlet pressure at the working outlet (14), the at least one outlet pressure at the working outlet (14) is controlled directly via the solenoid control valve unit (16).

2. Control valve device (10) according to claim 1,
**characterized in that**
the control valve device (10) comprises at least one first pressure sensor (24) that is arranged such that the at least one inlet pressure of the working inlet (12) is sensed by the first pressure sensor (24).

3. Control valve device (10) according to claim 2,
**characterized in that**
the first pressure sensor (24) is integrated into the control valve device (10) or wherein the first pressure sensor (24) is arranged externally with regard to the control valve device (10).

4. Control valve device (10) according to claim 1 or claim 2,
**characterized in that**
the solenoid control valve unit (16) comprises at least one valve inlet (16a) that is connected to the working inlet (12) via at least one inlet line (20), wherein the first pressure sensor (24) is arranged in the inlet line (20).

5. Control valve device (10) according to one of the preceding claims,
**characterized in that**
the control valve device (10) comprises at least one second pressure sensor (26) that is arranged such that the at least one outlet pressure of the working outlet (14) is sensed by the second pressure sensor (26).

6. Control valve device (10) according to claim 5,
**characterized in that**
the second pressure sensor (26) is integrated into the control valve device (10) or wherein the second pressure sensor (26) is arranged externally with regard to the control valve device (10).

7. Control valve device (10) according to claim 5 or claim 6,
**characterized in that**
the solenoid control valve unit (16) comprises at least one valve outlet (16b) that is connected to the working outlet (14) via at least one outlet line (22), wherein the second pressure sensor (26) is arranged in the outlet line (22).

8. Control valve device (10) according to one of the preceding claims,
**characterized in that**
the solenoid control valve unit (16) comprises at least one first 2/2-way solenoid control valve.

9. Control valve device (10) according to claim 7 or claim 8,
**characterized in that**
the control valve device (10) comprises at least one first safety outlet line (28) that is branched off the outlet line (22) between the valve outlet (16b) and the working outlet (14).

10. Control valve device (10) according to claim 9,
**characterized in that**
at least one second 2/2-way solenoid control valve (30) is arranged in the first safety outlet line (28).

11. Control valve device (10) according to one of the preceding claims 7 to 10,
**characterized in that**
the control valve device (10) comprises at least one second safety outlet line (34) that is branched off the outlet line (22) between the first safety outlet line (28) and the working outlet (14), and wherein at least one safety check valve (36) is arranged in the second safety outlet line (34).

12. Control valve device (10) according claim 11,
**characterized in that**
the second pressure sensor (26) is arranged in the outlet line (22) between the second safety outlet line (34) and the working outlet (14).

13. Control valve device (10) to one of the preceding claims,
**characterized in that**
the solenoid control valve unit (16) and the control valve device (10) form a common construction unit (18).

14. Multi-circuit protection valve device for an air treatment device of a vehicle, especially utility vehicle, with at least one control valve device (10) according to one of the preceding claims 1 to 13.
